# EUROPEAN PATENT APPLICATION

(11) **EP 3 324 381 A1**
(43) Date of publication of application: **23.05.2018**
(21) Application number: 17157037.7
(22) Date of filing: 21.02.2017
(51) Int. Cl.: G08G 1/00, G08G 1/16, B60R 21/0132, B60R 21/0134, G07C 5/00, G08B 25/00, G01S 5/00

(54) **IN-VEHICLE SYSTEM AND OPERATION METHOD THEREOF**

(30) Priority: 18.11.2016 TW 105137981
(71) Applicant: MSI Computer (Shenzhen) Co., Ltd., Shenzhen City Guangdong Province, P.R.C. Guangdong (CN)
(72) Inventor: KUO, Sheng-Hong, Tainan City (TW); YEN, Wen-Tai, Miaoli County (TW)
(74) Representative: Grünecker Patent- und Rechtsanwälte PartG mbB

(57) **Abstract**

An in-vehicle system (1) adapted to a vehicle (M) is disclosed. The in-vehicle system (1) includes an information collection module (10), a warning determination module (20) and a warning signal processing module (30). The information collection module (10) is configured to collect a location message and a time message related to the vehicle. The warning determination module (20) is configured to output a determination signal (SD) according to the location message and the time message. The warning signal processing module (30) is configured to send a first standby warning signal (SW1) to a first external system (40) according to the determination signal (SD).

## Description

### Technical Field

The disclosure relates to an in-vehicle system and an operation thereof, more particularly to an in-vehicle system and an operation thereof for accidents.

### Background

When the auto industry and the technology develop rapidly, intelligent vehicle systems (IVS) are widely applied to vehicles. The present intelligent vehicle systems are installed with Ecall-systems. The Ecall-systems are mainly used for sending out a rescue signal via internet of vehicles (IOV) when vehicle accidents (such as vehicle collisions or vehicle overturns) happen.

In general, in order to avoid wrongly sending rescue signals, these kinds of systems are set up for sending rescue signals only when vehicle collisions happen or vehicles overturn. However, when vehicle accidents happen, the IOV communication devices or other communication equipments installed in vehicles may be damaged. In this condition, the rescue signal could not be sent to a control center or other rescue stations. As a result, the drivers and the passengers can not immediately obtain rescues and assistances.

### SUMMARY

The present disclosure discloses an in-vehicle system and an operation method thereof. The in-vehicle system and operation method thereof estimate the probability and the damage level of vehicle accidents, and then determine whether to send a warning signal in advance. Thereby, the conditions that the rescue signal can not be sent out and vehicles could not obtain immediate rescues because of vehicle accidents are avoided.

According to one embodiment of the present disclosure, an in-vehicle system adapted to a vehicle is disclosed. The in-vehicle system includes an information collection module, a warning determination module and a warning signal processing module. The information collection module is configured to collect a location message and a time message related to the vehicle. The warning determination module is configured to output a determination signal according to the location message and the time message. The warning signal processing module is configured to send a first standby warning signal to a first external system according to the determination signal.

According to one embodiment of the present disclosure, an operation method adapted to an in-vehicle system of a vehicle is disclosed. The operation method includes the following steps: collecting a location message and a time message related to the vehicle; generating a probability value of collision between the vehicle and at least one threat object and an estimated value of damage level of the vehicle having a collision with the at least one threat object according to the location message and the time message; calculating an accident estimated value according to the probability value of collision and the estimated value of damage level; determining whether the accident estimated value is greater than a threshold to output a determination signal; and sending a first standby warning signal to a first external system according to the determination signal.

Based on the above descriptions, in the in-vehicle system and operation method thereof, the location message and time message of the vehicle are collected and a determination signal is generated according to the location message and time message. Then a standby warning signal is sent to the first external system according to the determination signal. Therefore, the vehicle system is capable of estimating the probability of vehicle accidents to determine whether to send the standby warning signal in advanced so that the conditions that the rescue signal can not be sent out and vehicles could not obtain immediate rescues because of vehicle accidents are avoided.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
Fig. 1 is a block diagram of an in-vehicle system in one embodiment of the present disclosure;
Fig. 2 is a schematic diagram of moving vehicles in one embodiment of the present disclosure;
Fig. 3 is a schematic diagram of moving vehicles in another embodiment of the present disclosure;
Fig. 4 is a flow chart of an operation method in one embodiment of the present disclosure; and
Fig. 5 is a flow chart of an operation method in another embodiment of the present disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

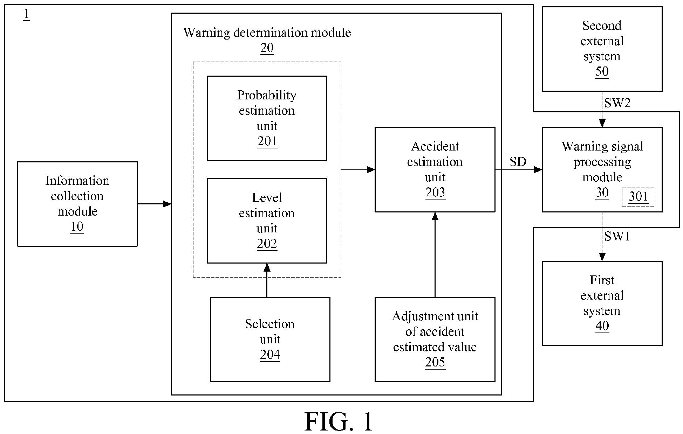

Please refer to Fig. 1, which is a block diagram of an in-vehicle system in one embodiment of the present disclosure. As shown in Fig. 1, an in-vehicle system 1 is adapted to a vehicle. The in-vehicle system 1 includes an information collection module 10, a warning determination module 20 and a warning signal processing module 30. The information collection module 10 is configured to collect a location message and a time message related the vehicle. In one example, the location message refers to coordinates of the vehicle, and the time message refers to the time when the vehicle is at the coordinates. The velocity of the vehicle is obtained through the location message and the time message. The warning determination module 20 is configured to output a determination signal SD according to the location message and the time message. The warning signal processing module 30 is configured to send the first standby warning signal SW1 to the first external system 40 according to the determination signal SD. In practice, the first external system 40 is another vehicle or a vehicle control center. The other vehicle or the vehicle control center is a relay station mainly used for receiving the first standby warning signal SW1. The warning determination module 20 includes a probability estimation unit 201, a level estimation unit 202 and an accident estimation unit 203. The probability estimation unit 201 is configured to generate a probability value of collision between the vehicle and at least one threat object according to the location message and the time message.

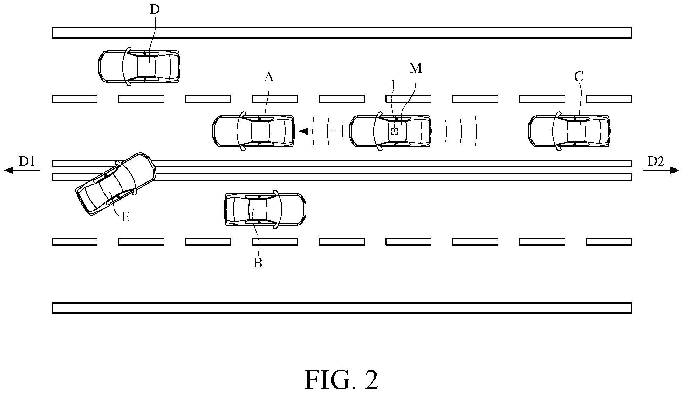

The level estimation unit 202 is configured to generate an estimated value of damage level of the vehicle having a collision with the at least one threat object according to the location message and the time message. In one example, the at least one threat object is another vehicle, a safety island, a roadside tree or other obstacle on the road. Please refer to Fig. 1 and Fig. 2. Fig. 2 is a schematic diagram of moving vehicles in one embodiment of the present disclosure. As shown in Fig. 2, the in-vehicle system 1 of the present disclosure is installed in a vehicle M, and any of vehicles A-E may be a threat object to the vehicle M. If the vehicle A is a threat object to the vehicle M, the probability estimation unit 201 of the in-vehicle system 1 generates a probability value of collision between the vehicle M and the vehicle A according to the location message and the time message of the vehicle M. Similarly, the level estimation unit 202 generates an estimated value of damage level of the vehicle M having a collision with the vehicle A according to the location message and the time message of the vehicle M.

In the embodiment of Fig. 2, the vehicle M moves in a direction D1 at a speed of 100 kilometers per hour at a time T=0. The vehicle A is 20 meters away from the vehicle M and at an angle of 0 degree relative to the moving direction of the vehicle M. The vehicle A moves in the direction D1 at a speed of 110 kilometers per hour. The vehicle B is 19 meters away from the vehicle M and at an angle of-20 degrees relative to the moving direction of the vehicle M. The vehicle B moves in the direction D2 at a speed of 110 kilometers per hour. The vehicle C is 35 meters away from the vehicle M and at an angle of 180 degrees relative to the moving direction of the vehicle M. The vehicle C moves in the direction D1 at a speed of 110 kilometers per hour. The vehicle D is 50 meters away from the vehicle M and at an angle of 15 degrees relative to the moving direction of the vehicle M. The vehicle D moves in the direction D1 at a speed of 115 kilometers per hour. In one embodiment, as shown in Fig. 1, the warning determination module 20 further includes a selection unit 204 configured to select at least one threat object near the vehicle according to the location message and the time message related to the vehicle. Specifically, the selection unit 204 is capable of selecting one or more objects which are threats to the vehicle M. For example, assume that the speed of the vehicle M is 110 kilometers per hour derived from the location message and the time message of the vehicle M. A basis for the selection unit 204 to select threat objects is a coverage of a radius of, e.g. 30 meters which is obtained when the vehicle M moves at the speed of 110 Km per hour for 1.5 seconds, from the vehicle M so that all other vehicles in the coverage will be selected. Since the vehicle A and the vehicle B both are within the coverage of 30 meters radius from the vehicle M, both the vehicle A and the vehicle B are considered as threat objects by the selection unit 204.

After the warning determination module 20 confirms that the vehicle A and the vehicle B are threat objects, the probability estimation unit 201 calculates a probability value of collision PK(n) according to the velocity of the vehicle M, and the relative velocity between the vehicle M and the vehicle A-B, the distance to the collision point and the time of collision. In one example, the probability estimation unit 201 further calculates the probability value of collision PK(n) according to characteristics of the vehicle such as the vehicle weight, the braking force, the anti-lock braking system (ABS), etc. The probability value of collision PK(n) is a possibility of collision between the vehicle M and the vehicles A-B at a time t=n. In practice, when the velocity of the vehicle M, the relative velocity between the vehicle M and the vehicles A-B, or the weight of the vehicle M is high or the relative distance between the vehicle M and the vehicles A-B is short, the possibility value of collision PK(n) is high, which indicates that the possibility of collision between the vehicle M and the vehicles A-B is high.

The level estimation unit 202 calculates an estimated value of damage level HK(x,n) of the vehicle M having collision with the vehicles A-B according to the velocity of the vehicle M, the relative location between the vehicle M and vehicles A-B, the relative velocity between the vehicle M and vehicle A-B or the information of the vehicles (such as brands or years of manufacture of the vehicles A-B and the vehicle M). The estimated value of damage level HK(x,n) is the damage level of the vehicle M having collision with the vehicles A-B at the time t=n. The estimated value of damage level HK(x,n) is high when the relative velocity between the vehicle M and the vehicles A-B is high. The estimated value of damage level HK(x,n) is low when the relative velocity between the vehicle M and the vehicles A-B is low. For example, when the time t=0, the relative velocity between the vehicle M and the vehicle A is 30 kilometers per hour, and its corresponding estimated value of damage level HK(x,n) is 5. When the relative velocity between the vehicle M and the vehicle A is 70 kilometers per hour, and its corresponding estimated value of damage level HK(x,n) increases to 8.

The accident estimation unit 203 calculates an accident estimated value according to the probability value of collision and the estimated value of damage level. In one example, the accident estimation unit 203 obtains the accident estimated value by multiplying the probability value of collision by the estimated value of damage level. For example, assume the probability value of collision PK(n) between the vehicle M and the vehicle A calculated by the probability estimation unit 201 is 0.05, and the estimated value of damage level HK(x,n) of the vehicle M having collision with the vehicle A calculated by the level estimation unit 202 is 4.0. Then the accident estimated value obtained by the accident estimation unit 203 is 0.2. In another example, the probability estimation unit 201 further calculates the probability value of collision PK(n) between the vehicle M and the vehicle B which is 0.0001, and the level estimation unit 202 further calculates the estimated value of damage level HK(x,n) of the vehicle M having collision with the vehicle B which is 9.5, and then the accident estimated value obtained by the accident estimation unit 203 is 0.00095. In this example, the accident estimation unit 203 further adds the two accident estimated values together to obtain the final accident estimated value which is 0.20095.

The warning determination module 20 outputs a determination signal SD according to a threshold and the accident estimated value. The warning signal processing module 30 sends the first standby warning signal SW1 according to the determination signal SD. In one embodiment, when the accident estimated value (e.g. 0.20095) is less than or equal to the threshold (e.g. 0.85), the warning determination module 20 determines whether the in-vehicle system 1 is in a warning state. When the accident estimated value is less than the threshold, the vehicle M is safe. Therefore, at this moment, if the in-vehicle system 1 is in a warning state, the warning determination module 20 sets the in-vehicle system 1 to not be in the warning state.

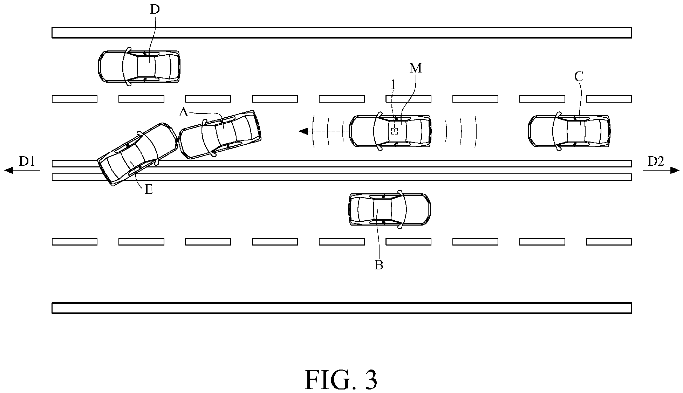

Please refer to Fig. 3, which is a schematic diagram of moving vehicles in another embodiment of the present disclosure. As shown in Fig. 3, when the collision between the vehicle A and the vehicle E happens, the speed of the vehicle A decreases to zero. The vehicle A is 10 meters away from the vehicle M and at the relative angle of zero degree. The relative velocity between the vehicle M and the vehicle A is 110 kilometers per hour. At this moment, the probability estimation unit 201 calculates the probability value of collision PK(n) between the vehicle M and the vehicle A which is 0.099. The level estimation unit 202 calculates the estimated value of damage level HK(x,n) which is 9.0. The accident estimation unit 203 obtains the accident estimated value of 0.89 by multiplying the probability value of collision PK(n) by the estimated value of damage level HK(x,n). The warning determination module 20 further compares the accident estimated value and a threshold (assume the threshold is 0.85). Since the accident estimated value is greater than the threshold, the warning determination module 20 further determines whether the in-vehicle system 1 is in a warning state. If the in-vehicle system 1 is not in the warning state, the in-vehicle system 1 sends the first standby warning signal SW1 to the first external system 40 in response to the determination signal SD sent by the warning determination module 20, and the in-vehicle system 1 is set to be in the warning state by the warning determination module 20. In one embodiment, the warning determination module 20 further includes an adjustment unit of accident estimated value 205 configured to adjust the accident estimated value according to a driver characteristic of the vehicle M or an environmental change. The driver characteristic is an age, an occupation, etc. For example, the reaction of a 20-year-old drive is better than a 70-year-old driver. The reaction of a professional driver is better than the reaction of a normal driver. The environmental change is related to the weather. For example, a driver needs more reaction time on a wet road in the raining day than on a dry road in the sunny day.

In one embodiment, as shown in Fig. 1, the warning signal processing module 30 is further configured to receive a second standby warning signal SW2 from a second external system 50. When the second external system 50 does not cancel the second standby warning signal SW2 within a first time period, the warning signal processing module 30 sends out a rescue signal. On the contrary, when the second external system 50 cancels the second standby warning signal SW2 within the first time period, the warning signal processing module 30 does not send out the rescue signal. Specifically, the second external system 50 is another vehicle such as the vehicles A-E shown in Fig. 2. When an accident happens on the other vehicle, the other vehicle is allowed to send a second standby warning signal SW2 to the vehicle M. If the second external system 50 does not cancel the second standby warning signal SW, it means that an accident really happens on the second external system 50. At this moment, the warning signal processing module 30 of the vehicle M sends a rescue signal to a rescue station such as an ambulance station or a hospital in order to provide the user of the second external system 50 an immediate assistance. On the contrary, if the second external system 50 cancels the second standby warning signal SW2 within the first time period, it means that the accident does not really happen on the second external system 50. The warning signal processing module 30 of the vehicle M does not send out the rescue signal.

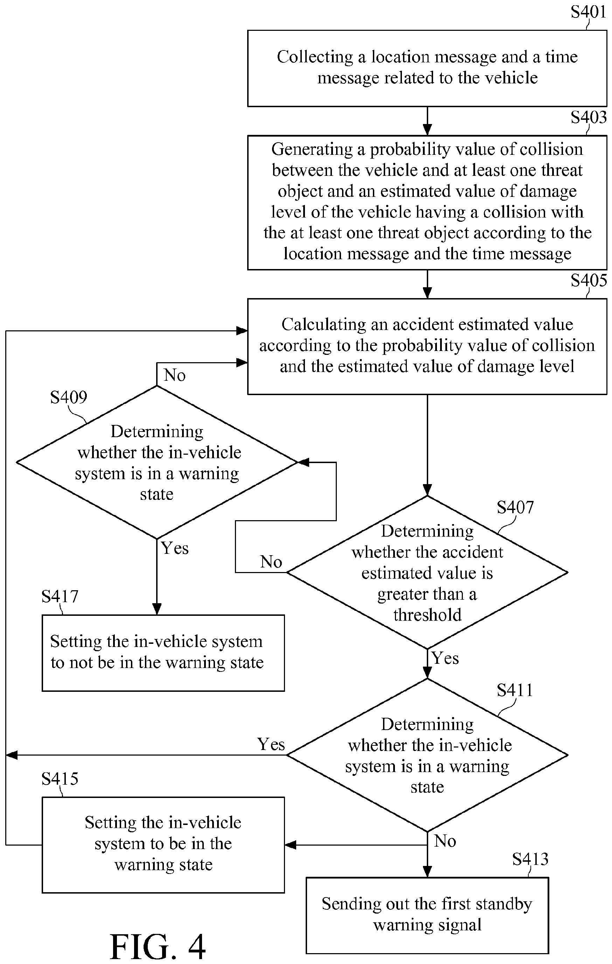

Please refer to Fig. 4 which is a flow chart of an operation method in one embodiment of the present disclosure. The operation method is adapted to an in-vehicle system of a vehicle, such as the in-vehicle system 1 shown in Fig. 1. As shown in Fig. 4, in step S401, the information collection module 10 collects a location message and a time message related to the vehicle. In practice, the information collection module 10 further detects a driver's condition. For example, the driver is out of spirits or fainted. In step S403, the warning determination module 20 generates a probability value of collision between the vehicle and a threat object, and an estimated value of damage level of the vehicle having a collision with the threat object according to the location message and the time message. The probability value of collision represents the possibility of collision between the vehicle and the threat object. The estimated value of damage level represents the damage level of the vehicle having a collision with the threat object. Specifically, the warning determination module 20 calculates the probability value of collision and the estimated value of damage level through the absolute velocity of the vehicle, the relative velocity between the vehicle and the threat object, the relative distance between the vehicle and the threat object or the vehicle's characteristics, etc. In step S405, the warning determination module 20 calculates an accident estimated value according to the probability value of collision and the estimated value of damage level. In one embodiment, before the step S403, the warning determination module 20 selects threat objects near the vehicle in the environment according to the location message and the time message related to the vehicle. The threat objects are other vehicles, safety islands or roadside trees, etc.

In step S407, the warning determination module 20 determines whether the accident estimated value is greater than a threshold to output a determination signal SD. The warning signal processing module 30 sends a first standby warning signal SW1 in response to the determination signal SD. If the accident estimated value is less than or equal to the threshold, then in step S409, the warning determination module 20 determines whether the in-vehicle system I is in a warning state. If the in-vehicle system 1 is not in the warning state, then return to step S405. If the in-vehicle system 1 is in the warning state, then in step S417, the warning determination module 20 sets the in-vehicle system 1 to not be in the warning state. If the accident estimated value is greater than the threshold, then in step S 411, the warning determination module 20 determines whether the in-vehicle system 1 is in the warning state. If the in-vehicle system 1 is in the warning state, then return to step S405. On the contrary, if the in-vehicle system 1 is not in the warning state, then in step S413, the warning determination module 20 outputs the determination signal SD to make the warning signal processing module 30 send the first standby warning signal SW1, and in step S415, the in-vehicle system 1 is set to be in the warning state.

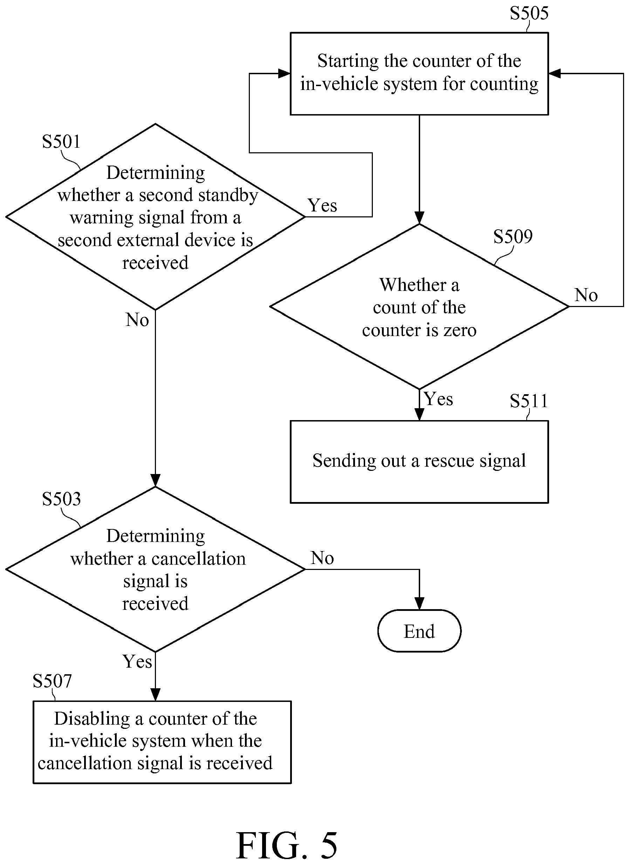

Please refer to Fig. 5 which is a flow chart of operation method in another embodiment of the present disclosure. Similarly, the operation method is adapted to an in-vehicle system of a vehicle such as the in-vehicle system 1 shown in Fig. 1. As shown in Fig. 5, in step S501, the warning signal processing module 30 determines whether the second standby warning signal SW2 from the second external system 50 is received. If the second standby warning signal SW2 from the second external system 50 is not received, then in step S503, the warning signal processing module 30 determines whether the cancellation signal is received. The cancellation signal is configured to cancel the second standby warning signal SW2. If the cancellation signal is received, then in step S507, the warning signal processing module 30 disables a counter 301 of the in-vehicle system 1. The counter 301 is configured to determine whether the second external system 50 sends the cancellation signal in a specific time period. The cancellation signal is configured to cancel the sent second standby warning signal SW2. If it is determined that the second standby warning signal SW2 is received, then in step S505, the warning signal processing module 30 starts the counter 301 of the in-vehicle system 1 so that the counter 301 starts to count down. In step S509, the warning signal processing module 30 determines whether a count of the counter 301 is zero. When the count of the counter 301 is not zero, it means that the second external system 50 has sent the cancellation signal in a specific time period. At this time, return to step S505. On the contrary, if the count of the counter 301 is zero, then it means that the second external system 50 does not send out the cancellation signal in the specific time period. The warning signal processing module 30 determines that an accident has happened on the second external system 50. Therefore, in step S511, the warning signal processing module 30 sends a rescue signal to a rescue station so that the driver of the second external system 50 is able to obtain immediate assistances.

Based on the above descriptions, in the in-vehicle system and the operation method of the present disclosure, the location message and time message of the vehicle are collected and a determination signal is generated according to the location message and time message. According to the determination signal, a standby warning signal is sent to the first external system so that the vehicle system is capable of predicting the probability of vehicle accidents. Thereby, it is determined whether to send the standby warning signal in advanced to prevent the conditions that the rescue signal can not be sent out and vehicles could not obtain immediate rescues because of vehicle accidents are avoided. The probability of wrongly-sent warning signals is reduced.

## Claims

1. An in-vehicle system (1) applied to a vehicle (M), comprising:
an information collection module (10) configured to collect a location message and a time message related to the vehicle (M);
a warning determination module (20) configured to output a determination signal (SD) according to the location message and the time message; and
a warning signal processing module (30) configured to send a first standby warning signal (SW1) to a first external system (40) according to the determination signal (SD).

2. The in-vehicle system (1) according to claim I, wherein the warning determination module (20) comprises:
a probability estimation unit (201) configured to generate a probability value of collision between the vehicle (M) and at least one threat object (A) according to the location message and the time message;
a level estimation unit (202) configured to generate an estimated value of damage level of the vehicle (M) having a collision with the at least one threat object (A); and
an accident estimation unit (203) configured to calculate an accident estimated value according to the probability value of collision and the estimated value of damage level;
wherein the warning determination module (20) outputs the determination signal (SD) according to a threshold and the accident estimated value, and the warning signal processing module (30) sends the first standby warning signal (SW1) in response to the determination signal (SD).

3. The in-vehicle system (1) according to claim 2, wherein when the accident estimated value is greater than the threshold, the warning determination module (20) determines whether the in-vehicle system (1) is in a warning state; and when the in-vehicle system (1) is not in the warning state, the warning signal processing module (30) sends the first standby warning signal (SW1) to the first external system (40) in response to the determination signal (SD) and the in-vehicle system (1) is set to be in the warning state.

4. The in-vehicle system (1) according to claim 2, wherein when the accident estimated value is less than or equal to the threshold, the warning determination module (20) determines whether the in-vehicle system (1) is in a warning state; and when the in-vehicle system (I) is in the warning state, the in-vehicle system (1) is set to not be in the warning state.

5. The in-vehicle system (1) according to claim 2, wherein the warning determination module (20) further comprises:
a selection unit (204) configured to select the at least one threat object (A) near the vehicle (M) according to the location message and the time message related to the vehicle (M).

6. The in-vehicle system (1) according to claim 2, wherein the warning determination module (20) further comprises:
an adjustment unit of accident estimated value (205) configured to adjust the accident estimated value according to a driver characteristic or an environmental change.

7. The in-vehicle system (1) according to claim 1, wherein the warning signal processing module (30) is further configured to receive a second standby warning signal (SW2) from a second external system (50); when the second external system does not cancel the second standby warning signal (SW2) within a first time period, the warning signal processing module (30) sends out a rescue signal; and when the second external system cancels the second standby warning signal (SW2) within the first time period, the warning signal processing module (30) does not send out the rescue signal.

8. An operation method applied to an in-vehicle system (1) of a vehicle (M), comprising:
collecting a location message and a time message related to the vehicle (M);
generating a probability value of collision between the vehicle and at least one threat object (A) and an estimated value of damage level of the vehicle (M) having a collision with the at least one threat object (A) according to the location message and the time message;
calculating an accident estimated value according to the probability value of collision and the estimated value of damage level;
determining whether the accident estimated value is greater than a threshold, to output a determination signal (SD); and
sending a first standby warning signal (SW1) to a first external system (40) according to the determination signal (SD).

9. The operation method according to claim 8, wherein when the accident estimated value is greater than the threshold, the operation method further comprises:
determining whether the in-vehicle system (1) is in a warning state;
sending the first standby warning signal (SW1) to the first external system (40) by the in-vehicle system (1) in response to the determination signal (SD) and setting the in-vehicle system to be in the warning state when the in-vehicle system (1) is not in the warning state; and
returning to the step of calculating an accident estimated value according to the probability value of collision and the estimated value of damage level when the in-vehicle system (1) is in the warning state.

10. The operation method according to claim 8, wherein when the accident estimated value is less than or equal to the threshold, the operation method further comprises:
determining whether the in-vehicle system (1) is in a warning state;
setting the in-vehicle system (1) to not be in the warning state when the in-vehicle system (1) is in the warning state; and
returning to the step of calculating an accident estimated value according to the probability value of collision and the estimated value of damage level when the in-vehicle system (1) is not in the warning state.

11. The operation method according to claim 8, further comprising:
determining whether a second standby warning signal (SW2) from a second external device (50) is received;
determining whether a cancellation signal configured to cancel the second standby warning signal (SW2) is received when the second standby warning signal (SW2) from the second external device (50) is not received; and
disabling a counter (301) of the in-vehicle system (1) when the cancellation signal is received.

12. The operation method according to claim 11, wherein when the second standby warning signal (SW2) is received, the operation method further comprises:
starting the counter (301) of the in-vehicle system (1) for counting;
sending out a rescue signal when a count of the counter (301) is zero; and
returning to the step of starting the counter (301) of the in-vehicle system (1) when the count of the counter (301) is not zero.

13. The operation method according to claim 8, wherein before the step of generating the probability value of collision between the vehicle (M) and the at least one threat object (A) and the estimated value of damage level of the vehicle and the at least one threat object (A) according to the location message and the time message, the operation method further comprises:
selecting the at least one threat object (A) near the vehicle (M) according to the location message and the time message related to the vehicle.

14. The operation method according to claim 8, further comprising:
adjusting the accident estimated value according to a driver characteristic or an environmental change.
